# EUROPÄISCHE PATENTSCHRIFT

(11) **EP 3 581 886 B1**
(45) Veröffentlichungstag und Bekanntmachung des Hinweises auf die Patenterteilung: **03.11.2021**
(21) Anmeldenummer: 19174735.1
(22) Anmeldetag: 15.05.2019
(51) Int. Cl.: G01C 21/00, G01C 21/36, G01S 17/89, G01C 11/06, G01S 13/86, G01S 13/931, G01S 7/48, G06K 9/46, G06K 9/00

(54) **VERFAHREN UND VORRICHTUNG ZUM BESTIMMEN EINER POSITION EINES KRAFTFAHRZEUGS**
METHOD AND DEVICE FOR DETERMINING A POSITION OF A MOTOR VEHICLE
PROCÉDÉ ET DISPOSITIF DE DÉTERMINATION D'UNE POSITION D'UN VÉHICULE AUTOMOBILE

(30) Priorität: 14.06.2018 DE 102018209607
(43) Veröffentlichungstag der Anmeldung: 18.12.2019
(73) Patentinhaber: Volkswagen AG, 38440 Wolfsburg (DE)
(72) Erfinder: Schack, Moritz, 38126 Braunschweig (DE); Merfels, Christian, 38102 Braunschweig (DE)

(56) Entgegenhaltungen:
- DE-A1-102014 210 770
- US-B2- 8 884 962

## Beschreibung

Die vorliegende Erfindung betrifft ein Verfahren und eine Vorrichtung zum Bestimmen einer Position eines Kraftfahrzeugs.

Moderne Fahrzeuge werden zunehmend autonomer, d.h. die Fahrzeuge stellen dem Fahrer mehr und mehr Funktionen und Systeme zur Verfügung, die ihn bei der Kontrolle des Fahrzeugs durch Hinweise unterstützen oder Teile der Fahrzeugkontrolle übernehmen. Für derartige Funktionen und Systeme wird eine Vielzahl von Information über das Fahrzeug und seine Umgebung benötigt.

Für automatische Fahrfunktionen wird die Kenntnis benötigt, wo sich das Fahrzeug relativ zum Fahrstreifen bzw. der Fahrstreifenmitte, der sogenannten Zentrallinie oder Center Line, befindet. Neben der Information zur Querablage bezüglich des entsprechenden Fahrstreifens wird auch die longitudinale Verortung benötigt, um zum Beispiel relativ zu Objekten einer Kreuzung Fahrmanöver durchführen zu können.

Ein erster Ansatz für die Positionsbestimmung besteht in der Verwendung einer hochgenau eingemessenen digitalen Fahrstreifengeometriekarte mit einer absoluten Genauigkeit im Zentimeterbereich in Verbindung mit einem hochgenauen GPS-System. Hierbei wird die Position in der Karte mit Hilfe des GPS-Sensors ohne weitere bildgebende Sensorik bestimmt. Allerdings ist eine Lösung mit einer hochgenauen Karte und hochgenauem GPS sehr kostenintensiv.

Ein weiterer Ansatz besteht in der Ausnutzung von sensornahen Daten, wie z.B. die Nutzung von Merkmalswolken aus Radar, Kamera oder Lidar. Hier wird eine komplexe Karte der Merkmalswolken generiert und diese mit mehreren komplexen aktuell erfassten Merkmalen abgeglichen. Dieser Ansatz ist allerdings sehr rechenzeit- und speicherintensiv. Die Übertragung der Karte vom Fahrzeug in ein Backend, beispielsweise zum Zweck der Aktualisierung der Karte, ist aufgrund der damit verbundenen Mobilfunkkosten sehr kostenintensiv.

Weitere Ansätze sind im Bereich ausgedünnter Landmarken vorhanden. Hier wird eine Landmarken-Karte mit Fahrstreifenmarkierungen, Bordsteinen und Verkehrsschildern generiert und zum Abgleich mit aktuell erfassten Merkmalen genutzt. Allerdings können die Landmarken die Aktualität verlieren, z.B. durch Abnutzung von Fahrstreifenmarkierungen, und das Lokalisierungsergebnis verfälschen. Daher werden die Karten mehrmals pro Jahr neu erzeugt, um die nicht sehr stabilen Landmarken zu aktualisieren.

Vor diesem Hintergrund beschreibt die DE 10 2016 214 028 A1 ein Verfahren zum Bestimmen einer Position eines Fahrzeugs. Bei dem Verfahren wird eine Schätzposition des Fahrzeugs erfasst und anhand der erfassten Schätzposition werden Referenzkartendaten abgerufen. Die Referenzkartendaten umfassen Referenzpositionen von Landmarken. Mittels einer Erfassungseinheit werden Datensätze erfasst und anhand der Datensätze werden Landmarkenbeobachtungen mit Landmarkenparametern bestimmt. Anhand der bestimmten Landmarkenbeobachtungen werden Umfeldmodelldaten bestimmt, wobei die Umfeldmodelldaten eine Beschreibung eines Verkehrsumfeldes des Fahrzeugs umfassen. Anhand der Umfeldmodelldaten und der Referenzkartendaten wird eine Vielzahl von Positionshypothesen erzeugt und den Positionshypothesen werden Wahrscheinlichkeiten zugeordnet, wobei anhand der Wahrscheinlichkeiten die Position des Fahrzeugs bestimmt und ausgegeben wird.

Die DE 10 2016 214 030 A1 beschreibt ein Verfahren zum Bestimmen einer Position eines Fahrzeugs. Bei dem Verfahren werden mittels einer Erfassungseinheit Datensätze mit Datenpunkten erfasst, wobei jedem Datensatz ein Zeitpunkt zugeordnet wird. Für die erfassten Datensätze werden jeweils Landmarkenbeobachtungen bestimmt, wobei den Landmarkenbeobachtungen Landmarkenparameter und Objektklassen zugeordnet sind. Anhand der bestimmten Landmarkenbeobachtungen werden Umfeldmodelldaten erzeugt, wobei die Umfeldmodelldaten eine Beschreibung des Verkehrsumfeldes umfassen und anhand der Umfeldmodelldaten werden Abstandsberechnungen für Landmarkenbeobachtungen anhand ihrer Objektklasse und ihrer Landmarkenparameter durchgeführt, wobei Abstandswerte für die Landmarkenbeobachtungen bestimmt werden. Dabei werden anhand der Abstandswerte die Landmarkenbeobachtungen bestimmten Landmarken zugeordnet. Den Umfeldmodelldaten werden Wahrscheinlichkeiten zugeordnet und die zugeordneten Wahrscheinlichkeiten anhand der Landmarkenbeobachtungen werden verändert. Die Umfeldmodelldaten werden aktualisiert anhand der den Landmarkenbeobachtungen zugeordneten Wahrscheinlichkeiten und die Umfeldmodelldaten werden ausgegeben.

Die WO 2016/153649 A1 beschreibt ein Verfahren zum Erzeugen von Karten mit semantischen Bezeichnungen. Eine Recheneinheit bestimmt eine erste Karte, die Merkmale enthält, die an ersten Positionen angeordnet sind, und semantische Markierungen, die an semantischen Positionen angeordnet sind. Die Recheneinheit bestimmt zudem eine zweite Karte, die mindestens einige der Merkmale enthält, die an zweiten Positionen angeordnet sind. Die Recheneinheit kann eine erste Region mit festen Merkmalen identifizieren, die an ersten Positionen und entsprechenden äquivalenten zweiten Positionen angeordnet sind. Die Recheneinheit kann zudem eine zweite Region mit verschobenen Merkmalen identifizieren, die sich an ersten Positionen und entsprechenden nicht äquivalenten zweiten Positionen befinden. Die Recheneinheit kann eine oder mehrere Transformationen zwischen ersten Positionen und zweiten Positionen bestimmen. Die Recheneinheit kann die semantischen Markierungen der zweiten Karte an zweiten semantischen Positionen zuordnen, wobei die zweiten semantischen Positionen in der ersten Region gleich sind und die zweiten semantischen Positionen in der zweiten Region auf den Transformationen basieren.

Die DE 10 2014 210 770 A1 beschreibt ein Verfahren zum Bestimmen einer Fahrzeugposition eines Fahrzeugs. Bei dem Verfahren werden Sensordaten eines von dem Fahrzeug befahrenen Fahrbodens erfasst. Aus den erfassten Sensordaten oder aus Belegungsgittern, die auf Basis der Sensordaten berechnet werden, werden dann Bodenmerkmale des Fahrbodens extrahiert. Schließlich wird die aktuelle Fahrzeugposition des Fahrzeugs anhand der extrahierten Bodenmerkmale mittels einer Merkmalskarte bestimmt.

Die US 8,884,962 B2 beschreibt ein Verfahren zur Verarbeitung von Objektdaten, die aus einer ersten Quelle stammen und Objektortsdaten enthalten, und Laserabtastungen, die aus einer zweiten Quelle stammen, welche eine Untergruppe von Laserabtastungen einschließen, die auf das Objekt bezogen sind und zu jeder Laserabtastung Laserabtastungsortsdaten einschließen. Das Objekt ist dabei ein Gebäudeblock und die Objektdaten von der ersten Quelle sind Grundrissdaten des Gebäudeblocks einschließlich Vorderkantendaten, die zu einer Vorderkante einer Gebäudefassade des Gebäudes gehören. Bei dem Verfahren werden die Objektortsdaten und die Laserabtastungsortsdaten der Untergruppe von Laserabtastungen verglichen. Zudem werden die Objektortsdaten mit den Laserabtastungsortsdaten der Untergruppe von Laserabtastungen basierend auf diesem Vergleich abgestimmt, wodurch relative Positionsfehler zwischen der ersten und der zweiten Quelle von Ortsdaten korrigiert werden.

Es ist eine Aufgabe der Erfindung, verbesserte Lösungen zum Bestimmen einer Position eines Kraftfahrzeugs bereitzustellen.

Diese Aufgabe wird durch ein Verfahren mit den Merkmalen des Anspruchs 1 und durch eine Vorrichtung mit den Merkmalen des Anspruchs 11 gelöst. Bevorzugte Ausgestaltungen der Erfindung sind Gegenstand der abhängigen Ansprüche.

Gemäß einem ersten Aspekt der Erfindung umfasst ein Verfahren zum Bestimmen einer Position eines Kraftfahrzeugs die Schritte:
- Bestimmen einer vorläufigen Position des Kraftfahrzeugs;
- Detektieren von Objekten in einem Umfeld des Kraftfahrzeugs, wobei die Objekte zumindest sichtbare und virtuelle Gebäudeecken umfassen;
- Überführen der detektierten Objekte in ein lokales Koordinatensystem;
- Zuordnen der in das lokale Koordinatensystem überführten Objekte zu einer Karte mit Objekten auf Basis der vorläufigen Position des Kraftfahrzeugs; und
- Bestimmen der Position des Kraftfahrzeugs auf Basis einer Ausgleichsrechnung, bei der die am besten geeigneten Objekte der Karte für die in das lokale Koordinatensystem überführten Objekte ermittelt werden.

Gemäß einem weiteren Aspekt der Erfindung enthält ein computerlesbares Speichermedium Instruktionen, die bei Ausführung durch einen Computer den Computer zur Ausführung der folgenden Schritte zum Bestimmen einer Position eines Kraftfahrzeugs veranlassen:
- Bestimmen einer vorläufigen Position des Kraftfahrzeugs;
- Detektieren von Objekten in einem Umfeld des Kraftfahrzeugs, wobei die Objekte zumindest sichtbare und virtuelle Gebäudeecken umfassen;
- Überführen der detektierten Objekte in ein lokales Koordinatensystem;
- Zuordnen der in das lokale Koordinatensystem überführten Objekte zu einer Karte mit Objekten auf Basis der vorläufigen Position des Kraftfahrzeugs; und
- Bestimmen der Position des Kraftfahrzeugs auf Basis einer Ausgleichsrechnung, bei der die am besten geeigneten Objekte der Karte für die in das lokale Koordinatensystem überführten Objekte ermittelt werden.

Der Begriff Computer ist dabei breit zu verstehen. Insbesondere umfasst er auch Steuergeräte und andere prozessorbasierte Datenverarbeitungsvorrichtungen.

Gemäß einem weiteren Aspekt der Erfindung weist eine Vorrichtung zum Bestimmen einer Position eines Kraftfahrzeugs eine Positionsbestimmungseinheit zum Bestimmen einer vorläufigen Position des Kraftfahrzeugs sowie eine Recheneinheit auf, die eingerichtet ist:
- Objekte in einem Umfeld des Kraftfahrzeugs zu detektieren, wobei die Objekte zumindest sichtbare und virtuelle Gebäudeecken umfassen;
- die detektierten Objekte in ein lokales Koordinatensystem zu überführen;
- die in das lokale Koordinatensystem überführten Objekte auf Basis der vorläufigen Position des Kraftfahrzeugs zu einer Karte mit Objekten zuzuordnen; und
- die Position des Kraftfahrzeugs auf Basis einer Ausgleichsrechnung zu bestimmen, bei der die am besten geeigneten Objekte der Karte für die in das lokale Koordinatensystem überführten Objekte ermittelt werden.

Bei der erfindungsgemäßen Lösung steht eine a-priori Karte mit eingetragenen sichtbaren und virtuellen Gebäudeecken und gegebenenfalls weiteren Infrastrukturobjekten zur Verfügung. Diese kann im Fahrzeug vorliegen oder über ein Backend bereitgestellt werden. Alternativ kann diese auch über Fahrzeug-zu-Fahrzeug- oder Infrastruktur-zu-Fahrzeug-Kommunikation bereitgestellt werden. Die Gebäudeecken und die eventuell vermerkten weiteren Objekte werden in der Karte als 2D-Punktinformationen beschrieben. Durch eine Ausgleichsrechnung, bei der Positionen der detektierten Gebäudeecken ausgehend von einer vorläufigen Position des Kraftfahrzeugs in Übereinstimmung mit der Karte gebracht werden, lässt sich die tatsächliche Position des Kraftfahrzeugs sehr genau bestimmen. Die vorläufige Position kann beispielsweise von einer Navigationseinrichtung bereitgestellt werden. Die Nutzung einer sehr stabilen Objektklasse für die Positionsbestimmung, konkret der Gebäudeecken, macht die Karte weitgehend zeitinvariant. Die Karte ist sehr stabil und muss nur selten aktualisiert werden. Die Nutzung von virtuellen Ecken zusätzlich zu den sichtbaren Ecken hat dabei den Vorteil, dass diese von unterschiedlichen Fahrzeugpositionen aus trotz einer Verdeckung detektiert werden können. Das Ermitteln von virtuellen Gebäudeecken führt somit dazu, dass es mehr Punkte im Raum gibt, anhand derer die Lokalisierung durchgeführt werden kann. Hierdurch wird die Verlässlichkeit gesteigert.

Gemäß einem Aspekt der Erfindung umfasst das Detektieren von Objekten im Umfeld des Kraftfahrzeugs:
- Detektieren von zu einer Bodenebene senkrechten Flächen im Umfeld des Kraftfahrzeugs;
- Projizieren der detektierten Flächen in die Bodenebene; und
- Ermitteln von sichtbaren und virtuellen Gebäudeecken aus den Strecken, die aus der Projektion der Flächen in die Bodenebene resultieren.

Durch die Projektion der detektierten Flächen auf die Bodenebene entstehen 2D-Strecken. Auf Basis der 2D-Strecken werden sichtbare Ecken sowie virtuelle Ecken berechnet. Die sichtbaren Ecken sind dabei die Schnittpunkte jeweils zweier Strecken. Weitere sichtbare Ecken ergeben sich aus Tiefensprüngen, die beispielsweise aus Daten eines Lidarsensors ermittelt werden können. Die virtuellen Ecken sind die Schnittpunkte jeweils zweier zu Geraden verlängerter Strecken. Die Ecken werden somit durch 2D-Punktobjekte beschrieben. Die Nutzung von 2D-Punktobjekten hat die Vorteile einer geringen Winkel- bzw. Fahrtrichtungsabhängigkeit sowie eines geringen Speicherbedarfs der Karte.

Gemäß einem Aspekt der Erfindung erfolgt eine Filterung der detektierten Flächen durch eine Beschränkung auf Flächen oberhalb einer bestimmten Höhe. Durch diese Filterung wird die Wahrscheinlichkeit erhöht, dass es sich bei den detektierten Flächen um stabile Flächen handelt, die tatsächlich Bestandteile von Gebäuden sind.

Gemäß einem Aspekt der Erfindung werden die Objekte im Umfeld des Kraftfahrzeugs aus Daten eines bildgebenden Sensors, eines Radarsensors oder eines Lidarsensors detektiert. Mit allen drei Sensorarten ist es möglich, räumliche Informationen zu erfassen, aus denen die Gebäudeecken bestimmt werden können. Da derartige Sensoren in heutigen Kraftfahrzeugen regelmäßig bereits serienmäßig verbaut sind, entstehen keine zusätzlichen Kosten für die benötigte Sensorik.

Gemäß einem Aspekt der Erfindung wird eine zeitliche Nachverfolgung der detektierten Objekte vorgenommen. Im Rahmen der zeitlichen Nachverfolgung werden die detektierten Objekte mit älteren Beobachtungen verknüpft. Durch diese Verknüpfung mit älteren Beobachtungen wird die Genauigkeit der Positionsbestimmung der Objekte erhöht.

Gemäß einem Aspekt der Erfindung umfassen die Objekte neben den sichtbaren und virtuellen Gebäudeecken weitere Infrastrukturobjekte. Durch die Erfassung weiterer Infrastrukturobjekte kann die Zuverlässigkeit und Genauigkeit der Positionsbestimmung weiter gesteigert werden.

Gemäß einem Aspekt der Erfindung umfasst die Karte Fahrstreifeninformationen. Die Fahrstreifeninformationen können beispielsweise in Form der Zentrallinien der Fahrstreifen in der Karte vermerkt sein. Durch die Bereitstellung von Fahrstreifeninformationen in der Karte kann die Zuordnung der Gebäudeecken zur Fahrstreifengeometrie auf einfache Weise gewährleistet werden.

Gemäß einem Aspekt der Erfindung werden die detektierten Objekte und die Position des Kraftfahrzeugs für eine Aktualisierung der Objekte in der Karte oder für einen Algorithmus zur simultanen Lokalisierung und Kartenerstellung genutzt. Die für die Lokalisierung durchgeführten Messungen werden somit genutzt, um die Karte mit Objekten fortlaufend zu aktualisieren. Es ist daher ausreichend, wenn eine Aktualisierung der Karte durch einen Lieferanten der Karte in größeren zeitlichen Abständen erfolgt. Dies reduziert die für die Karte anfallenden Kosten.

Besonders vorteilhaft wird ein erfindungsgemäßes Verfahren oder eine erfindungsgemäße Vorrichtung in einem Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum Bestimmen einer Position eines Kraftfahrzeugs;
- Fig. 2: zeigt schematisch ein Verfahren zum Ermitteln von sichtbaren und virtuellen Gebäudeecken;
- Fig. 3: zeigt eine erste Ausführungsform einer Vorrichtung zum Bestimmen einer Position eines Kraftfahrzeugs;
- Fig. 4: zeigt eine zweite Ausführungsform einer Vorrichtung zum Bestimmen einer Position eines Kraftfahrzeugs;
- Fig. 5: stellt schematisch ein Kraftfahrzeug dar, in dem eine erfindungsgemäße Lösung realisiert ist;
- Fig. 6: zeigt schematisch ein Systemdiagramm der erfindungsgemäßen Lösung;
- Fig. 7: zeigt schematisch eine reale Situation im Umfeld eines Kraftfahrzeugs;
- Fig. 8: veranschaulicht die Definition von realen und virtuellen Gebäudeecken;
- Fig. 9: zeigt eine Übersicht der detektierten oder sichtbaren Objekte aus Sicht des Kraftfahrzeugs für die Situation aus Fig. 7;
- Fig. 10: veranschaulicht eine Kartenbeschreibung der Situation aus Fig. 7;
- Fig. 11: illustriert das Übereinanderlegen der Karte und der detektierten Objekte auf Basis der vorläufigen Position; und
- Fig. 12: illustriert das Übereinanderlegen der Karte und der detektierten Objekte nach einer Ausgleichsrechnung.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

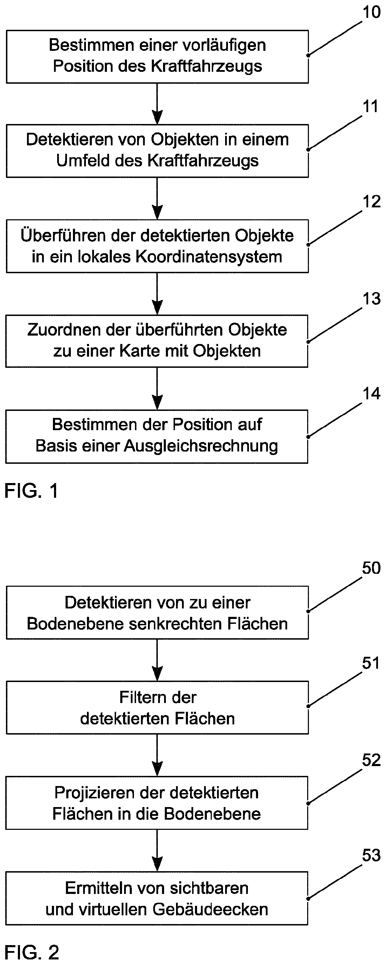

Fig. 1 zeigt schematisch ein Verfahren zum Bestimmen einer Position eines Kraftfahrzeugs. In einem ersten Schritt wird eine vorläufige Position des Kraftfahrzeugs bestimmt 10. Außerdem werden Objekte in einem Umfeld des Kraftfahrzeugs detektiert 11. Die Objekte umfassen dabei zumindest sichtbare und virtuelle Gebäudeecken, können aber auch weitere Infrastrukturobjekte umfassen. Die Objekte können beispielsweise aus Daten eines bildgebenden Sensors, eines Radarsensors oder eines Lidarsensors detektiert werden. Die detektierten Objekte werden dann in ein lokales Koordinatensystem überführt 12 und die in das lokale Koordinatensystem überführten Objekte auf Basis der vorläufigen Position des Kraftfahrzeugs zu einer Karte mit Objekten zugeordnet 13. Die Karte kann lokal im Kraftfahrzeug gespeichert sein oder durch ein Backend, durch Fahrzeug-zu-Fahrzeug-Kommunikation oder durch Infrastruktur-zu-Fahrzeug-Kommunikation bereitgestellt werden. Vorzugsweise umfasst die Karte zusätzlich zu Objektinformationen auch Fahrstreifeninformationen. Auf Basis einer Ausgleichsrechnung, bei der die am besten geeigneten Objekte der Karte für die in das lokale Koordinatensystem überführten Objekte ermittelt werden, wird schließlich die Position des Kraftfahrzeugs bestimmt 14. Dabei kann zur Verbesserung der Positionsbestimmung eine zeitliche Nachverfolgung der detektierten Objekte vorgenommen werden. Die detektierten Objekte und die Position des Kraftfahrzeugs können für eine Aktualisierung der Objekte in der Karte oder für einen Algorithmus zur simultanen Lokalisierung und Kartenerstellung genutzt werden.

Fig. 2 zeigt schematisch ein Verfahren zum Ermitteln von sichtbaren und virtuellen Gebäudeecken. In einem ersten Schritt werden zu einer Bodenebene senkrechte Flächen im Umfeld des Kraftfahrzeugs detektiert 50. Anschließend kann optional eine Filterung 51 der detektierten Flächen durch eine Beschränkung auf Flächen oberhalb einer bestimmten Höhe erfolgen. Die detektierten Flächen werden dann in die Bodenebene projiziert 52. Aus den Strecken, die aus der Projektion der Flächen in die Bodenebene resultieren, werden schließlich sichtbare und virtuelle Gebäudeecken ermittelt 53. Die sichtbaren Ecken können dabei aus den Schnittpunkten jeweils zweier Strecken bestimmt werden, während sich die virtuellen Ecken aus den Schnittpunkten jeweils zweier zu Geraden verlängerter Strecken ergeben. Weitere sichtbare Ecken ergeben sich aus Tiefensprüngen, die beispielsweise aus den Daten eines Lidarsensors ermittelt werden können.

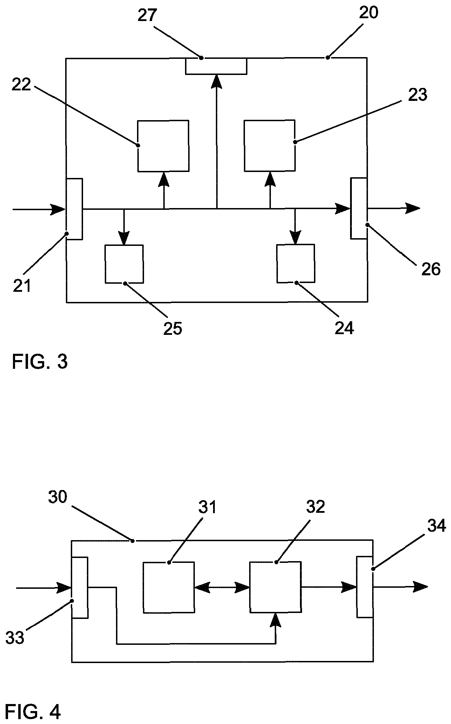

Fig. 3 zeigt eine vereinfachte schematische Darstellung einer ersten Ausführungsform einer Vorrichtung 20 zum Bestimmen einer Position eines Kraftfahrzeugs. Die Vorrichtung 20 hat einen Eingang 21, über den beispielsweise Daten eines bildgebenden Sensors, eines Radarsensors oder eines Lidarsensors, sowie Informationen einer Navigationseinrichtung empfangen werden können. Aus den verfügbaren Daten bestimmt eine Positionsbestimmungseinheit 22 eine vorläufige Position des Kraftfahrzeugs. Zudem nutzt eine Recheneinheit 23 die Daten, um Objekte in einem Umfeld des Kraftfahrzeugs zu detektieren. Die Objekte umfassen dabei zumindest sichtbare und virtuelle Gebäudeecken, können aber auch weitere Infrastrukturobjekte umfassen. Weiterhin überführt die Recheneinheit 23 die detektierten Objekte in ein lokales Koordinatensystem und ordnet die in das lokale Koordinatensystem überführten Objekte auf Basis der vorläufigen Position des Kraftfahrzeugs zu einer Karte mit Objekten zu. Die Karte kann lokal im Kraftfahrzeug gespeichert sein oder durch ein Backend, durch Fahrzeug-zu-Fahrzeug-Kommunikation oder durch Infrastruktur-zu-Fahrzeug-Kommunikation bereitgestellt werden. Vorzugsweise umfasst die Karte zusätzlich zu Objektinformationen auch Fahrstreifeninformationen. Auf Basis einer Ausgleichsrechnung, bei der die am besten geeigneten Objekte der Karte für die in das lokale Koordinatensystem überführten Objekte ermittelt werden, bestimmt die Recheneinheit 23 schließlich die Position des Kraftfahrzeugs. Dabei kann die Recheneinheit 23 zur Verbesserung der Positionsbestimmung eine zeitliche Nachverfolgung der detektierten Objekte vornehmen. Über einen Ausgang 26 der Vorrichtung 20 kann die so ermittelte Position weiteren Komponenten des Kraftfahrzeugs zur Verfügung gestellt werden. Die detektierten Objekte und die Position des Kraftfahrzeugs können zusätzlich für eine Aktualisierung der Objekte in der Karte oder für einen Algorithmus zur simultanen Lokalisierung und Kartenerstellung genutzt werden.

Die Positionsbestimmungseinheit 22 und die Recheneinheit 23 können von einer Kontrolleinheit 24 gesteuert werden. Über eine Benutzerschnittstelle 27 können gegebenenfalls Einstellungen der Positionsbestimmungseinheit 22, der Recheneinheit 23 oder der Kontrolleinheit 24 geändert werden. Die in der Vorrichtung 20 anfallenden Daten können bei Bedarf in einem Speicher 25 der Vorrichtung 20 abgelegt werden, beispielsweise für eine spätere Auswertung oder für eine Nutzung durch die Komponenten der Vorrichtung 20. Die Positionsbestimmungseinheit 22, die Recheneinheit 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 26 können als getrennte Schnittstellen oder als eine kombinierte bidirektionale Schnittstelle implementiert sein.

Fig. 4 zeigt eine vereinfachte schematische Darstellung einer zweiten Ausführungsform einer Vorrichtung 30 zum Bestimmen einer Position eines Kraftfahrzeugs. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, insbesondere von Daten eines bildgebenden Sensors, eines Radarsensors oder eines Lidarsensors. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

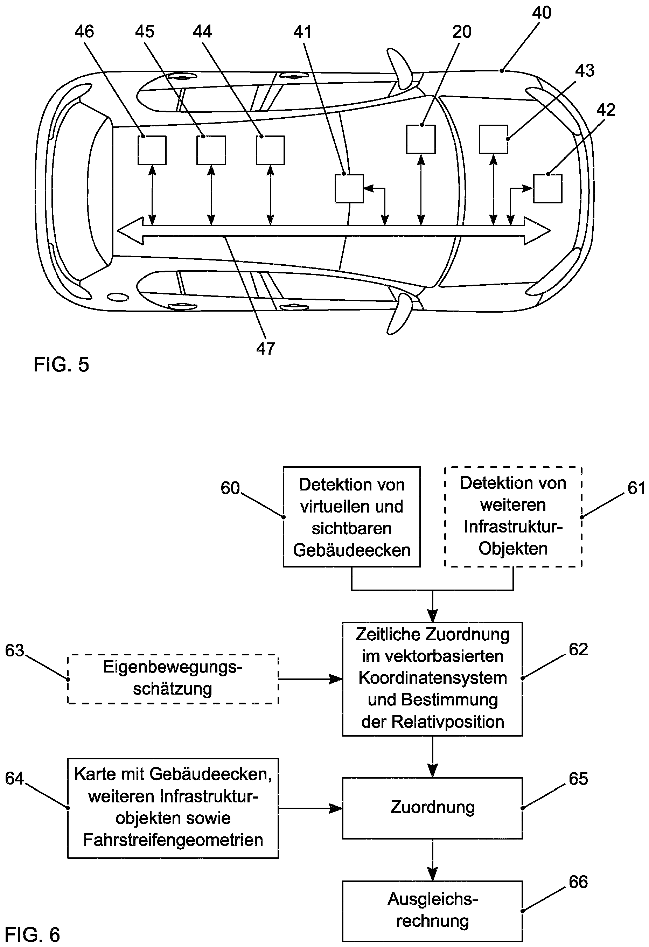

Fig. 5 stellt schematisch ein Kraftfahrzeug 40 dar, in dem eine erfindungsgemäße Lösung realisiert ist. Das Kraftfahrzeug 40 weist einen bildgebenden Sensor 41 auf, beispielsweise eine Kamera. Weiterhin sind ein Radarsensor 42 sowie ein Lidarsensor 43 vorhanden. Weitere Komponenten des Kraftfahrzeugs 40 sind eine Navigationseinrichtung 44, durch die beispielsweise eine vorläufige Position des Kraftfahrzeugs 40 bestimmt werden kann, sowie eine Datenübertragungseinheit 45. Mittels der Datenübertragungseinheit 45 kann eine Verbindung zu Dienstanbietern aufgebaut werden, beispielsweise zum Empfangen der Karte mit Objektinformationen. Aus den Daten der verschiedenen Sensoren 41, 42, 43, der vorläufigen Position des Kraftfahrzeugs 40 sowie einer Karte mit Objektinformationen ermittelt eine erfindungsgemäße Vorrichtung 20 eine Position des Kraftfahrzeugs 40. Zur Speicherung von Daten ist ein Speicher 46 vorhanden. Der Datenaustausch zwischen den verschiedenen Komponenten des Kraftfahrzeugs 40 erfolgt über ein Netzwerk 47.

Nachfolgend soll eine bevorzugte Ausführungsform der Erfindung anhand der Figuren 6 bis 12 detaillierter beschrieben werden.

Fig. 6 zeigt schematisch ein Systemdiagramm der erfindungsgemäßen Lösung. In einem ersten Schritt 60 erfolgt eine Detektion von virtuellen und sichtbaren Gebäudeecken. Dazu werden zunächst mit Hilfe eines bildgebenden Sensorsystems Flächen auf der Basis eines Datenframes detektiert, d.h. zu einem bestimmten Zeitpunkt. Dabei kann eine Filterung der detektierten Flächen durch eine Beschränkung auf Flächen nur oberhalb einer festgelegten Höhe über der Bodenebene erfolgen. Mit dieser Maßnahme wird die Wahrscheinlichkeit erhöht, dass es sich um stabile Flächen handelt, die tatsächlich Bestandteil von Gebäuden sind. Die detektierten Flächen werden nun auf die Bodenebene projiziert, sodass 2D-Strecken entstehen. Auf Basis der 2D-Strecken werden sichtbare Ecken sowie virtuelle Ecken berechnet. Sichtbare Ecken sind die Schnittpunkte zweier sich schneidender Strecken. Weitere sichtbare Ecken ergeben sich aus Tiefensprüngen. Virtuelle Ecken werden berechnet durch die Verlängerung von Strecken und die Schnittpunktbildung der so entstandenen Geraden. Die sichtbaren Ecken bilden somit eine Untermenge der virtuellen Ecken. Virtuelle Ecken entsprechen überwiegend keinem physischen Objekt, sondern können ein freier Punkt in der Bodenebene sein. Zusätzlich zu den virtuellen und sichtbaren

Gebäudeecken können optional weitere Infrastrukturobjekte detektiert werden 61, z.B. Pfosten oder Pfähle, Verkehrszeichen, etc.

In einem weiteren Schritt 62 werden die detektierten Objekte in ein vektorbasiertes lokales Koordinatensystem überführt. Dabei erfolgen eine zeitliche Zuordnung im vektorbasierten Koordinatensystem und eine Bestimmung der Relativposition in Bezug auf das Kraftfahrzeug. Die detektierten Objekte können optional mit älteren Beobachtungen verknüpft und so über die Zeit nachverfolgt werden, um deren geschätzte Position zu verbessern. Eine optionale Eigenbewegungsschätzung 63 kann genutzt werden, um eine verbesserte Bestimmung der vorläufigen Position des Kraftfahrzeugs zu erzielen. Weiterhin wird eine a-priori Karte mit Gebäudeecken, weiteren Infrastrukturobjekten sowie Fahrstreifengeometrien bereitgestellt 64, der die detektierten Objekte in einem Zuordnungsschritt 65 zugeordnet werden. Über eine Ausgleichsrechnung 66 werden schließlich die ermittelten sichtbaren oder virtuellen 2D-Objekte den Gebäudeecken der Karte zugeordnet, um so die tatsächliche Position des Kraftfahrzeugs zu ermitteln. Da die Karte ebenfalls Fahrstreifengeometrien enthält, ist die Position relativ zu den Fahrstreifen zu verstehen.

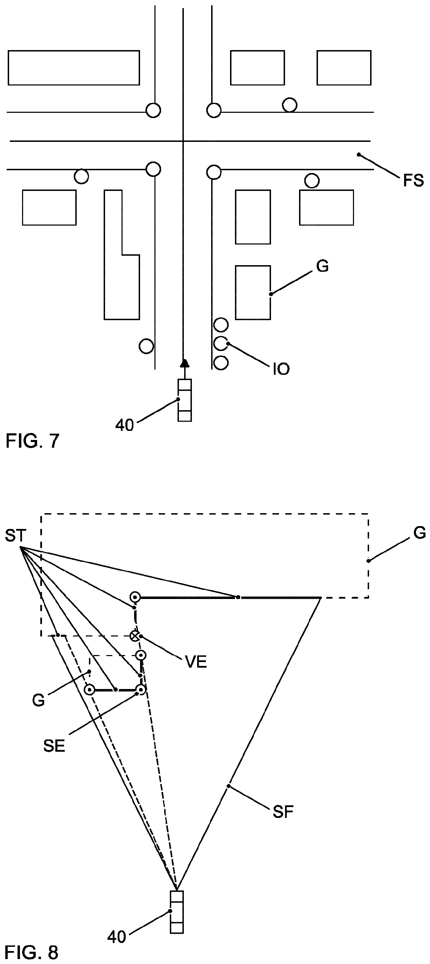

Fig. 7 zeigt schematisch eine reale Situation im Umfeld eines Kraftfahrzeugs 40. Entlang der Fahrstreifen im Bereich einer Kreuzung sind eine Reihe von Gebäuden G angeordnet, die in Fig. 7 durch Rechtecke bzw. eine Kombination von Rechtecken repräsentiert sind. Zusätzlich befinden sich im Umfeld des Kraftfahrzeugs 40 diverse Infrastrukturobjekte IP, beispielsweise Pfosten oder Pfähle, Verkehrszeichen und Ampelanlagen, etc. Diese sind in Fig. 7 als einfache Kreise dargestellt.

Fig. 8 veranschaulicht die Definition von realen Gebäudeecken SE und virtuellen Gebäudeecken VE. Im Sichtfeld SF des Kraftfahrzeugs 40 befinden sich zwei durch gestrichelte Linien angedeutete Gebäude. Das aus Sicht des Kraftfahrzeugs 40 vordere Gebäude G verdeckt dabei das hintere Gebäude G teilweise. Der verdeckte Bereich wird in Fig. 8 durch die vom Kraftfahrzeug 40 ausgehenden gestrichelten Linien angedeutet. Konkret erfasst werden von der Sensorik des Kraftfahrzeugs 40 fünf Flächen, aus denen durch eine Projektion in die Bodenebene die in der Figur dargestellten fünf Strecken ST ermittelt werden. Aus den Schnittpunkten der Strecken ST lassen sich unmittelbar zwei sichtbare Ecken SE ermitteln. Zwei weitere sichtbare Ecken ergeben sich aus den Endpunkten der für das vordere Gebäude G ermittelten Strecken ST, die beispielsweise anhand von Tiefensprüngen detektiert werden können. Zusätzlich kann aus den für das hintere Gebäude G ermittelten Strecken ST eine virtuelle Gebäudeecke VE bestimmt werden. Zu diesem Zweck werden die Strecken ST zu Geraden verlängert und der Schnittpunkt dieser Geraden bestimmt. Streckenenden, die aus Verdeckungen oder der Begrenzung des Sichtfeldes SF des Kraftfahrzeugs 40 resultieren, werden nicht als Gebäudeecken betrachtet.

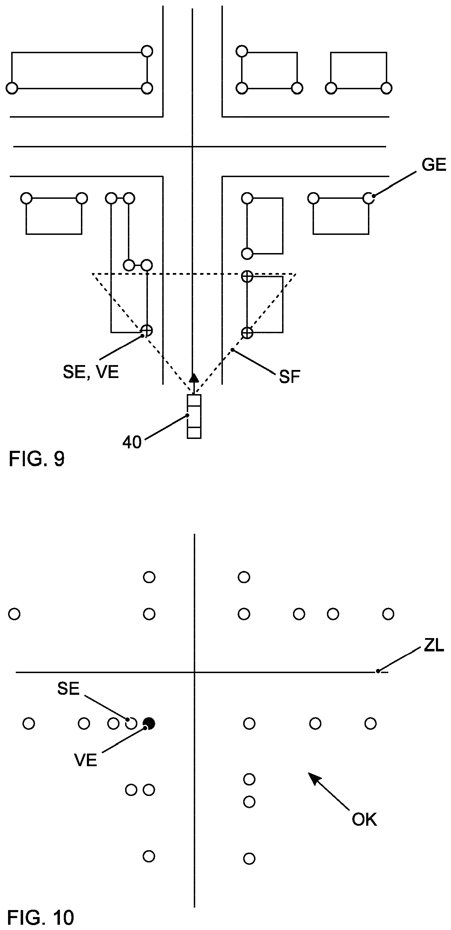

Fig. 9 zeigt eine Übersicht der relevanten Gebäudeecken GE für die Situation aus Fig. 7. In der Figur sind zur Vereinfachung lediglich die den Fahrstreifen zugewandten Gebäudeecken GE eingezeichnet. Von den gesamten Gebäudeecken GE, die für eine Lokalisierung genutzt werden können, befinden sich lediglich drei im nutzbaren Sichtfeld SF des Kraftfahrzeugs 40, d.h. in dem Bereich, in dem eine Auswertung der verfügbaren Daten der Sensorik sinnvoll möglich ist. Diese werden mittels der Sensorik des Kraftfahrzeugs 40 als sichtbare oder virtuelle Gebäudeecken SE, VE detektiert.

Fig. 10 veranschaulicht eine Kartenbeschreibung der Situation aus Fig. 7. Die Fahrstreifen werden in der Karte OK durch ihre Zentrallinie ZL repräsentiert. Die vorhandenen Gebäude werden in der Karte in Gestalt der Positionen der zugehörigen realen Gebäudeecken SE und der sich aus den Wänden der Gebäude ergebenden virtuellen Gebäudeecken VE verzeichnet. Im Beispiel ist der Einfachheit halber lediglich eine virtuelle Gebäudeecken VE für das L-förmige Gebäude dargestellt. Auch hier sind zur Vereinfachung lediglich die den Fahrstreifen zugewandten Gebäudeecken eingezeichnet. Selbstverständlich können auch die weiteren Gebäudeecken ganz oder zum Teil in der Karte OK vermerkt sein.

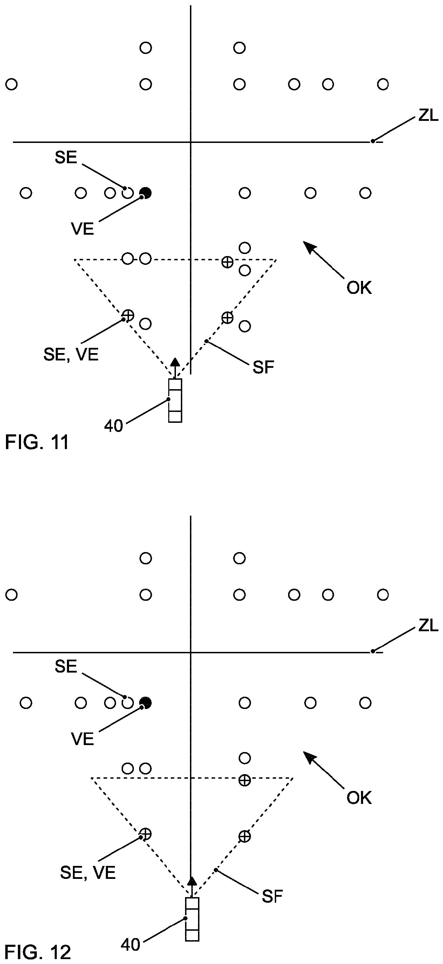

Fig. 11 illustriert das Übereinanderlegen der Karte OK und der detektierten Gebäudeecken SE, VE auf Basis der vorläufigen Position, d.h. vor dem Durchführen einer Ausgleichsrechnung. Die Erfassung der sichtbaren und virtuellen Gebäudeecken SE, VE ist fehlerbehaftet, in der Figur sind die Positionen der detektierten Gebäudeecken gegenüber den tatsächlichen Positionen verschoben. Daher ergibt sich keine unmittelbare Übereinstimmung zwischen den detektierten Gebäudeecken SE, VE und den Gebäudeecken in der Karte OK.

Fig. 12 illustriert das Übereinanderlegen der Karte und der detektierten Objekte SE, VE nach einer Ausgleichsrechnung. Die Ausgleichsrechnung kann beispielsweise auf einer Minimierung der Summe der Abstände oder der Summe der Quadrate der Abstände zwischen den detektierten Objekten SE, VE und den Gebäudeecken in der Karte OK basieren. Im Beispiel in Fig. 12 können die detektierten Objekte SE, VE in eine sehr gute Übereinstimmung mit der Karte OK gebracht werden. Aus den Relativpositionen der detektierten Objekte SE, VE in Bezug auf das Kraftfahrzeug 40 ergibt sich unmittelbar die Position des Kraftfahrzeugs 40 in Bezug auf die Karte OK.

### Bezugszeichenliste

- 10: Bestimmen einer vorläufigen Position des Kraftfahrzeugs
- 11: Detektieren von Objekten in einem Umfeld des Kraftfahrzeugs
- 12: Überführen der detektierten Objekte in ein lokales Koordinatensystem
- 13: Zuordnen der überführten Objekte zu einer Karte mit Objekten
- 14: Bestimmen der Position auf Basis einer Ausgleichsrechnung
- 20: Vorrichtung
- 21: Eingang
- 22: Positionsbestimmungseinheit
- 23: Recheneinheit
- 24: Kontrolleinheit
- 25: Speicher
- 26: Ausgang
- 27: Benutzerschnittstelle
- 30: Vorrichtung
- 31: Speicher
- 32: Prozessor
- 33: Eingang
- 34: Ausgang
- 40: Kraftfahrzeug
- 41: Bildgebender Sensor
- 42: Radarsensor
- 43: Lidarsensor
- 44: Navigationseinrichtung
- 45: Datenübertragungseinheit
- 46: Speicher
- 47: Netzwerk
- 50: Detektieren von zu einer Bodenebene senkrechten Flächen
- 51: Filtern der detektierten Flächen
- 52: Projizieren der detektierten Flächen in die Bodenebene
- 53: Ermitteln von sichtbaren und virtuellen Gebäudeecken
- 60: Detektion von virtuellen und sichtbaren Gebäudeecken
- 61: Detektion von weiteren Infrastrukturobjekten
- 62: Zeitliche Zuordnung im vektorbasierten Koordinatensystem und Bestimmung der Relativposition
- 63: Eigenbewegungsschätzung
- 64: Bereitstellen einer Karte mit Gebäudeecken, weiteren Infrastrukturobjekten sowie Fahrstreifengeometrien
- 65: Zuordnung
- 66: Ausgleichsrechnung
- GE: Gebäudeecke
- FS: Fahrstreifen
- G: Gebäude
- IO: Infrastrukturobjekte
- OK: Karte mit Objekten
- SE: Sichtbare Gebäudeecke
- SF: Sichtfeld
- ST: Strecke
- VE: Virtuelle Gebäudeecke
- ZL: Zentrallinie

## Patentansprüche

1. Verfahren zum Bestimmen einer Position eines Kraftfahrzeugs (40), mit den Schritten:
- Bestimmen (10) einer vorläufigen Position des Kraftfahrzeugs (40);
- Detektieren (11) von Objekten in einem Umfeld des Kraftfahrzeugs (40), wobei die Objekte sichtbare Gebäudeecken (SE) umfassen;
- Überführen (12) der detektierten Objekte in ein lokales Koordinatensystem;
- Zuordnen (13) der in das lokale Koordinatensystem überführten Objekte zu einer Karte (OK) mit Objekten auf Basis der vorläufigen Position des Kraftfahrzeugs (40); und
- Bestimmen (14) der Position des Kraftfahrzeugs (40);
**dadurch gekennzeichnet, dass** die Objekte zusätzlich auch virtuelle Gebäudeecken (VE) umfassen und dass die Position des Kraftfahrzeugs (40) auf Basis einer Ausgleichsrechnung bestimmt wird (14), bei der die am besten geeigneten Objekte der Karte für die in das lokale Koordinatensystem überführten Objekte ermittelt werden.

2. Verfahren gemäß Anspruch 1, wobei das Detektieren (11) von Objekten im Umfeld des Kraftfahrzeugs (40) umfasst:
- Detektieren (50) von zu einer Bodenebene senkrechten Flächen im Umfeld des Kraftfahrzeugs (40);
- Projizieren (52) der detektierten Flächen in die Bodenebene; und
- Ermitteln (53) von sichtbaren und virtuellen Gebäudeecken (SE, VE) aus den Strecken (ST), die aus der Projektion der Flächen in die Bodenebene resultieren.

3. Verfahren gemäß Anspruch 2, wobei die sichtbaren Ecken (SE) die Schnittpunkte jeweils zweier Strecken (ST) sind oder sich aus Tiefensprüngen ergeben und die virtuellen Ecken (VE) die Schnittpunkte jeweils zweier zu Geraden verlängerter Strecken (ST) sind.

4. Verfahren gemäß Anspruch 2 oder 3, wobei eine Filterung (51) der detektierten Flächen durch eine Beschränkung auf Flächen oberhalb einer bestimmten Höhe erfolgt.

5. Verfahren gemäß einem der vorherigen Ansprüche, wobei die Objekte im Umfeld des Kraftfahrzeugs (40) aus Daten eines bildgebenden Sensors (41), eines Radarsensors (42) oder eines Lidarsensors (43) detektiert werden (11).

6. Verfahren gemäß einem der vorherigen Ansprüche, wobei eine zeitliche Nachverfolgung der detektierten Objekte vorgenommen wird.

7. Verfahren gemäß einem der vorherigen Ansprüche, wobei die Objekte neben den sichtbaren und virtuellen Gebäudeecken (SE, VE) weitere Infrastrukturobjekte (IO) umfassen.

8. Verfahren gemäß einem der vorherigen Ansprüche, wobei die Karte (OK) Fahrstreifeninformationen umfasst.

9. Verfahren gemäß einem der vorherigen Ansprüche, wobei die Karte (OK) lokal im Kraftfahrzeug (40) gespeichert ist oder durch ein Backend (60), durch Fahrzeug-zu-Fahrzeug-Kommunikation oder durch Infrastruktur-zu-Fahrzeug-Kommunikation bereitgestellt wird.

10. Verfahren gemäß einem der vorherigen Ansprüche, wobei die detektierten Objekte und die Position des Kraftfahrzeugs (40) für eine Aktualisierung der Objekte in der Karte (OK) oder für einen Algorithmus zur simultanen Lokalisierung und Kartenerstellung genutzt werden.

11. Vorrichtung (20) zum Bestimmen einer Position eines Kraftfahrzeugs (40), mit einer Positionsbestimmungseinheit (22) zum Bestimmen (10) einer vorläufigen Position des Kraftfahrzeugs (40) und einer Recheneinheit (23), die eingerichtet ist:
- Objekte in einem Umfeld des Kraftfahrzeugs (40) zu detektieren (11), wobei die Objekte sichtbare Gebäudeecken (SE) umfassen;
- die detektierten Objekte in ein lokales Koordinatensystem zu überführen (12);
- die in das lokale Koordinatensystem überführten Objekte auf Basis der vorläufigen Position des Kraftfahrzeugs (40) zu einer Karte (OK) mit Objekten zuzuordnen (13); und
- die Position des Kraftfahrzeugs (40) zu bestimmen (14);
**dadurch gekennzeichnet, dass** die Objekte zusätzlich auch virtuelle Gebäudeecken (VE) umfassen und dass die Recheneinheit (23) eingerichtet ist, die Position des Kraftfahrzeugs (40) auf Basis einer Ausgleichsrechnung zu bestimmen (14), bei der die am besten geeigneten Objekte der Karte für die in das lokale Koordinatensystem überführten Objekte ermittelt werden.

## Claims

1. A method for determining a position of a motor vehicle (40), comprising the steps of:
- determining (10) a preliminary position of the motor vehicle (40);
- detecting (11) objects in surroundings of the motor vehicle (40), wherein the objects comprise visible building corners (SE);
- converting (12) the detected objects into a local coordinate system;
- assigning (13) the objects converted into the local coordinate system to a map (OK) with objects on the basis of the preliminary position of the motor vehicle (40); and
- determining (14) the position of the motor vehicle (40);
**characterized in that** the objects additionally also comprise virtual building corners (VE) and that the position of the motor vehicle (40) is determined (14) on the basis of a compensation calculation in which the most suitable objects of the map are determined for the objects converted into the local coordinate system.

2. The method according to claim 1, wherein detecting (11) objects in the surroundings of the motor vehicle (40) comprises:
- detecting (50) surfaces perpendicular to a ground plane in the surroundings of the motor vehicle (40);
- projecting (52) the detected surfaces into the ground plane; and
- determining (53) visible and virtual building corners (SE, VE) from the paths (ST) resulting from the projection of the surfaces into the ground plane.

3. The method according to claim 2, wherein the visible corners (SE) are each the intersection points of two paths (ST) or result from sudden changes in depth, and the virtual corners (VE) are each the intersection points of two paths (ST) extended to form straight lines.

4. The method according to claim 2 or 3, wherein a filtering (51) of the detected surfaces is effected by limitation to surfaces above a certain height.

5. The method according to any one of the preceding claims, wherein the objects in the surroundings of the motor vehicle (40) are detected (11) from data from an imaging sensor (41), a radar sensor (42), or a lidar sensor (43).

6. The method according to any one of the preceding claims, wherein a chronological tracking of the detected objects is carried out.

7. The method according to any one of the preceding claims, wherein the objects comprise further infrastructure objects (10) in addition to the visible and virtual building corners (SE, VE).

8. The method according to any one of the preceding claims, wherein the map (OK) comprises lane information.

9. The method according to any one of the preceding claims, wherein the map (OK) is stored locally in the motor vehicle (40) or is provided by a backend (60), by vehicle-to-vehicle communication, or by infrastructure-to-vehicle communication.

10. The method according to any one of the preceding claims, wherein the detected objects and the position of the motor vehicle (40) are used for updating the objects in the map (OK) or for an algorithm for simultaneous localization and mapping.

11. A device (20) for determining a position of a motor vehicle (40), having a position determination unit (22) for determining (10) a preliminary position of the motor vehicle (40) and a computing unit (23), which is configured to:
- detect (11) objects in surroundings of the motor vehicle (40), wherein the objects comprise visible building corners (SE);
- convert (12) the detected objects into a local coordinate system;
- assign (13) the objects converted into the local coordinate system to a map (OK) with objects on the basis of the preliminary position of the motor vehicle (40); and
- determine (14) the position of the motor vehicle (40);
**characterized in that** the objects additionally also comprise virtual building corners (VE) and that the computing unit (23) is configured to determine (14) the position of the motor vehicle (40) on the basis of a compensation calculation in which the most suitable objects of the map are determined for the objects converted into the local coordinate system.

## Revendications

1. Procédé de détermination d'une position d'un véhicule automobile (40), comprenant les étapes de :
- détermination (10) d'une position temporaire du véhicule automobile (40) ;
- détection (11) d'objets dans un environnement du véhicule automobile (40), les objets comprenant des angles de bâtiments visibles (SE) ;
- transfert (12) des objets détectés dans un système de coordonnées local ;
- association (13) des objets transférés dans le système de coordonnées local à une carte (OK) comprenant des objets sur la base de la position temporaire du véhicule automobile (40) ; et
- détermination (14) de la position du véhicule automobile (40) ;
**caractérisé en ce que** les objets comprennent en outre des angles de bâtiments virtuels (VE) et que la position du véhicule automobile (40) est déterminée sur la base d'un calcul de compensation (14), dans lequel sont déterminés les objets de la carte les plus appropriés pour les objets transférés dans le système de coordonnées local.

2. Procédé selon la revendication 1, dans lequel la détection (11) d'objets dans l'environnement du véhicule automobile (40) comprend :
- la détection (50) de surfaces perpendiculaires à un plan du sol dans l'environnement du véhicule automobile (40) ;
- la projection (52) des surfaces détectées dans le plan du sol ; et
- la détermination (53) d'angles de bâtiments visibles et virtuels (SE, VE) à partir des segments de droites (ST) qui résultent de la projection dans le plan du sol.

3. Procédé selon la revendication 2, dans lequel les angles visibles (SE) sont les points d'intersection respectifs de deux segments de droites (ST) ou résultent de sauts de profondeur et les angles virtuels (VE) sont les points d'intersection respectifs de deux segments de droites (ST) prolongés en droites.

4. Procédé selon la revendication 2 ou 3, dans lequel un filtrage (51) des surfaces détectées est effectué par une restriction à des surfaces supérieures à une hauteur déterminée.

5. Procédé selon l'une quelconque des revendications précédentes, dans lequel les objets dans l'environnement du véhicule automobile (40) sont détectés (11) à partir de données d'un capteur fournissant une image (41), d'un capteur radar (42) ou d'un capteur Lidar (43).

6. Procédé selon l'une quelconque des revendications précédentes, dans lequel un suivi temporel des objets détectés est effectué.

7. Procédé selon l'une quelconque des revendications précédentes, dans lequel les objets comprennent, outre les angles de bâtiments visibles et virtuels (SE, VE), d'autres objets d'infrastructure (IO).

8. Procédé selon l'une quelconque des revendications précédentes, dans lequel la carte (OK) comprend des informations de voies de circulation.

9. Procédé selon l'une quelconque des revendications précédentes, dans lequel la carte (OK) est enregistrée localement dans le véhicule automobile (40) ou est mise à disposition par le biais d'un système de gestion (60), par le biais de communication de véhicule à véhicule ou par le biais de communication d'infrastructure à véhicule.

10. Procédé selon l'une quelconque des revendications précédentes, dans lequel les objets détectés et la position du véhicule automobile (40) sont utilisés pour une mise à jour des objets dans la carte (OK) ou pour un algorithme pour la localisation et la création de carte simultanées.

11. Dispositif (20) de détermination d'une position d'un véhicule automobile (40), comprenant une unité de détermination de position (22) pour la détermination (10) d'une position temporaire du véhicule automobile (40) et une unité de calcul (23) qui est configurée pour :
- détecter (11) des objets dans un environnement du véhicule automobile (40), les objets comprenant des angles de bâtiments visibles (SE) ;
- transférer (12) les objets détectés dans un système de coordonnées local ;
- associer (13) les objets transférés dans le système de coordonnées local à une carte (OK) comprenant des objets sur la base de la position temporaire du véhicule automobile (40) ; et
- déterminer (14) la position du véhicule automobile (40) ;
**caractérisé en ce que** les objets comprennent en outre des angles de bâtiments virtuels (VE) et que l'unité de calcul (23) est configurée pour déterminer la position du véhicule automobile (40) sur la base d'un calcul de compensation (14), dans lequel sont déterminés les objets de la carte les plus appropriés pour les objets transférés dans le système de coordonnées local.
